(19) Europäisches Patentamt / European Patent Office / Office européen des brevets

(11) **EP 3 051 769 B1**

(12) **EUROPEAN PATENT SPECIFICATION**

(45) Date of publication and mention
of the grant of the patent:
**14.03.2018 Bulletin 2018/11**

(51) Int Cl.:
*H04L 29/06* (2006.01)     *H04N 21/239* (2011.01)

(21) Application number: **15305084.4**

(22) Date of filing: **27.01.2015**

(54) **DYNAMIC SWITCHING TO BROADCAST TRANSMISSION OF MULTIMEDIA CONTENT OVER A MOBILE COMMUNICATION NETWORK**

DYNAMISCHE SCHALTUNG ZUR RUNDFUNKÜBERTRAGUNG VON MULTIMEDIA-INHALT ÜBER EIN MOBILES KOMMUNIKATIONSNETZWERK

COMMUTATION DYNAMIQUE VERS UNE TRANSMISSION DE DIFFUSION DE CONTENUS MULTIMÉDIAS SUR UN RÉSEAU DE COMMUNICATION MOBILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.08.2016 Bulletin 2016/31**

(73) Proprietor: **ALCATEL LUCENT**
**92100 Boulogne-Billancourt (FR)**

(72) Inventors:
• **Kerboeuf, Sylvaine**
**91620 Nozay (FR)**
• **Sayadi, Bessem**
**91620 Nozay (FR)**
• **Alberi-Morel, Marie Line**
**91620 Nozay (FR)**
• **Faucheux, Fréderic**
**91620 Nozay (FR)**

(74) Representative: **Berthier, Karine**
**Alcatel-Lucent International**
**Patent Business**
**Site Nokia Paris Saclay**
**Route de Villejust**
**91620 Nozay (FR)**

(56) References cited:
**EP-A1- 2 785 006     US-A1- 2012 155 358**
**US-A1- 2013 182 643**

• **"3rd Generation Partnership Project; Technical Specification Group Services and System Aspects; Multimedia Broadcast/Multicast Service (MBMS); Enhanced MBMS Operation (Release 12)", 3GPP DRAFT; S4-141416 TR26848 V1.9.0-EMO-RM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 7 December 2014 (2014-12-07), XP050901713, Retrieved from the Internet: URL:http://www.3gpp.org/ftp/Meetings_3GPP_ SYNC/SA/SA/Docs/ [retrieved on 2014-12-07]**

**Description**

FIELD OF THE INVENTION

The invention relates to the transmission of multimedia content towards communication terminals through a mobile network. More precisely, it concerns how to switch to the broadcasting a multimedia content in order to save bandwidth in the network.

BACKGROUND OF THE INVENTION

The demand for transmission of multimedia contents towards mobile communication terminal is growing. This multimedia content comprises linear content like TV, software updates, and all other content which transmission can be triggered from a server inside the communication network, as well as on-demand content, for which the transmission is triggered from the terminal and which may comprise on-demand TV, video streaming, etc.

Such multimedia content, especially video content, requires high capacity transmission from the mobile communication network, notably in term of bandwidth. Despite the increasing capacity of the network, the increasing demand from the users put at risk the ability of the network to provide the content to the user with the sufficient quality of service (QoS).

Consequently, there is need for solution to optimize the use of the available capacity of the mobile network for transmitting the multimedia content down to the users' terminals.

A solution to save bandwidth consists in broadcasting the content. Then, regardless of the number of users receiving the content, the mobile network has to transmit it only once. A single data stream can reach many users simultaneously. It thus avoids sending redundant content to multiple users. Examples of broadcasting technologies include DVB (Digital Video Broadcasting).

However such technology is usable only in the context of delivery of linear content to mobile terminals, and is not suitable for delivering on-demand content.

MBMS (Multimedia Broadcast Multicast Service), which is a standard for the 3GPP, has been proposed to support broadcasted transmission. In collaboration with legacy unicast transmission, it enables supporting a mix of unicast and broadcast so as to fulfill the demand for both linear content and on-demand content. The broadcast can be used for linear content, whereas on-demand content is transmitted in unicast mode.

Some works have been undertaken to allow more intelligent switching toward the broadcast mode.

For example, content that is initially delivered in unicast may be turned into broadcast in order to efficiently use network resources when the traffic volume exceeds a certain threshold. Such mechanism is identified as "MBMS Operation On demand in 3GPP". If several users are consuming simultaneously a popular content, that content can be broadcasted. Furthermore, some predictive algorithm can be used so that if some content (clip or software) may be predictably popular, its delivery can be prescheduled on broadcast mode in advance of their consumption by the users' terminals. Prior art document EP 2 785 006 A1 shows switching between unicast and multicast streaming service deliveries according to predicted user demand.

Prior art document US 2012/155358 A1 presents video streaming that may be adaptively switched between multicast and unicast transmission based on the tracked number of mobile devices receiving each channel. This determination may be made by a streaming optimizer based on a calculation of the bandwidth efficiency of directing all the cells to multicast a video stream to all requesting mobile devices via "normal" unicast transmission. This determination may be made by comparing the total number of requests for a video stream, across all cells, to the number of cells, so that if the total number of requests is greater than the total number of cells, it may be more efficient to multicast the video stream. A video stream may be enabled for multicasting in one cell but delivered via unicast in another cell. However the content is pushed on the broadcast bearer as a whole without considering the individual consumption of users. These solutions allows little flexibility and it is not possible when useful to transition on a broadcast bearer some unicast consumption (of the same content) not necessarily in the same time and switch on the fly a piece of the content on the broadcast channel.

SUMMARY OF THE INVENTION

The object of the present subject matter is to alleviate at least partly the above mentioned drawbacks.

This object is achieved with a method for transmitting multimedia contents to terminals connected to a mobile communication network, comprising

-    receiving from terminals requests for a content, and transmitting at least parts of said content to said terminal through respective unicast sessions,

- deciding, at a decision date of the creation of a broadcast or multicast session, according to a number of requests received for said content during a time interval,
- transmitting through said broadcast or multicast session, a broadcasted part of said content, said part being determined using said decision date,
- transmitting after said decision date, through unicast sessions, a remaining part of said content to terminals which have not yet received said remaining part, said remaining part being distinct of said broadcasted part.

Preferred embodiments comprise one or more of the following features, which can be taken separately or together, either in partial combination or in full combination:

- the creation of a broadcast or multicast session further depends on the location of terminals originating said requests;
- said content is divided into a plurality of chunks and wherein said broadcasted part is a sequence of chunks, starting from a first chunk determined by said decision date;
- said first chunk is further determined according to the duration of said chunks and to said decision date;
- said chunk is made available by said server according to several quality levels, and wherein the quality level to be broadcasted is determined by selecting the most represented class of terminals within the terminals receiving said chunk though said broadcast or multicast session, and by choosing the highest quality available for said most represented class;
- said decision is to not creating a broadcast or multicast session when the duration of said content is below a predetermined minimum duration.

Another aspect of the subject matter concerns a computer program product comprising computer-executable instructions for performing the method according previously described, when run onto a data processing unit

Another aspect of the subject matter concerns a controller of a mobile communication network for transmitting multimedia contents to terminals connected to said mobile communication network, adapted for

- Receiving from terminals requests for a content, and transmitting at least parts of said content to said terminal through respective unicast sessions,
- Deciding, at a decision date of the creation of a broadcast or multicast session, according to a number of requests received for said content during a time interval,
- Transmitting through said broadcast or multicast session, a part of said content, said part being determined using said decision date ;
- Transmitting after said decision date, through unicast sessions, a remaining part of said content to terminals which have not yet received said remaining part, said remaining part being distinct of said broadcasted part.

Preferred embodiments comprise one or more of the following features, which can be taken separately or together, either in partial combination or in full combination:

- the content is divided into a plurality of chunks and said part is a sequence of chunks, starting from a first chunk determined by said creation date;.
- the creation of a broadcast or multicast session further depends on the location of terminals originating said requests.

Further features and advantages of the subject matter will appear from the following description of embodiments of the subject matter, given as non-limiting examples, with reference to the accompanying drawings listed hereunder.

BRIEF DESCRIPTION OF THE DRAWINGS

Fig. 1 shows a simple example of implementation of the invention.
Fig. 2 shows a flow chart of an embodiment of the invention
Figs. 3a and 3b shows examples of deployment of an embodiment of the subject matter.

DETAILED DESCRIPTION OF THE INVENTION

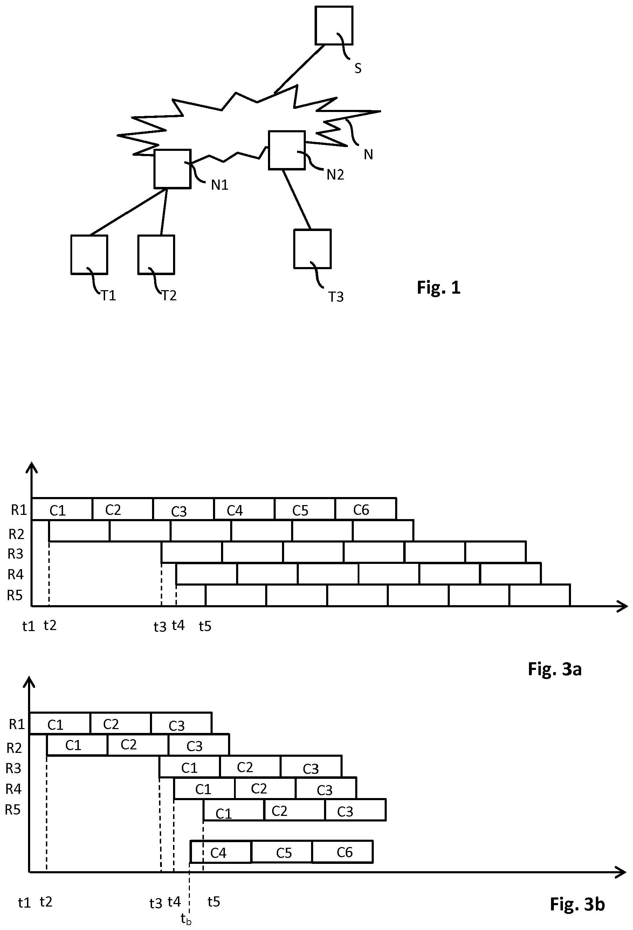

In the example depicted in figure 1, several mobile terminals T1, T2, T3 are connected to a mobile communication network N. The terminals can be any communication devices like smartphones, tablets, desktop computers, etc. These devices are able to connect to data network, like the Internet, through a mobile access network N, so as to receive multimedia content like video, audio content or large files.

In the depicted example, only one content server S, for the clarity of the explanation, but in real life, many servers can be present and accessible through the mobile communication network N.

The terminals can access to the mobile communication network N by several access nodes N1, N2. They can be Node-B, BTS, eNode-B... depending on the underlying technology for the mobile communication network N.

The present subject matter is however independent of this underlying technology and able to adapt to many types of mobile communication networks.

Accordingly, an implementation of the subject matter can be described using the SDN approach (Software-Defined Networking). It can comprise three main parts:

- A controller, in charge of decision making regarding the switch to broadcast (or multicast) transmission;
- A southbound interface, in charge of actually instructing the network resources (e.g. nodes N1, N2) to switch to a broadcasting or multicasting transmission mode;
- And a northbound interface for exploiting information related to the service and the users.

For scalability reason, the controller can be deployed through local control agents running into each underlying switches of both the core network and the mobile communication network N. The local agents may perform simple and local control operations under the command of a centralized subpart of the SDN controller.

Depending on the underlying network technology (radio or transport nodes), the agents' operations may include:

- Deep packet inspection,
- Polling flows and users counters over time windows, comparing to thresholds and notifying the central subpart;
- Configuring the radio resource (broadcast bearer or unicast bearer) according to users and to the content flows (in radio nodes only);
- Triggering and controlling of IP flow multicast or broadcast;
- Controlling of unicast bearer resource aggregation into broadcast bearer resource (in radio nodes only)

This SDN controller, with the potential help of local agent, can thus intercept all requests issued by the terminals T1, T2, T3, for a content provided by the server S.

It should be noted that the invention lies in switching dynamically to a unicast mode to a multicast mode or broadcast mode. In the following the terms "multicast" and "broadcast" will be used interchangeably, as two technical embodiments of a same principle.

According to an embodiment of the subject matter, the content can be made available using HTTP (HyperText Transfer Protocol). Accordingly, the server(s) S comprise(s) a HTTP server and the users can determine the content they want to receive by providing an URL ("Unified Resource Locator") associated with metadata. These metadata can define a range corresponding to a segment or chunk of the content..

More specifically, the DASH technique can be used for transmitting the multimedia content from the server to the terminals.

Dynamic Adaptive Streaming over HTTP (DASH), also known as MPEG-DASH, is an adaptive bitrate streaming technique that enables high quality streaming of media content over the Internet delivered from HTTP web servers. DASH works by breaking the content into a sequence of small HTTP-based file segments (or chunks), each segment containing a short interval of playback time of a content that is potentially many hours in duration.

Furthermore, the content can be made available at a variety of different bit rates, i.e., alternative segments encoded at different bit rates covering aligned short intervals of play back time are made available. The terminal automatically selects from the alternatives the next segment to download and play back based on current network conditions. Typically, the terminal selects the segment with the highest bit rate possible that can be downloaded in time for play back without causing stalls or rebuffering events in the playback. Thus, the terminal can seamlessly adapt to changing network conditions, and provide high quality play back without stalls or rebuffering events.

According to this embodiment, the terminal sends an HTTP request toward the content server S, identifying the content by an URL.

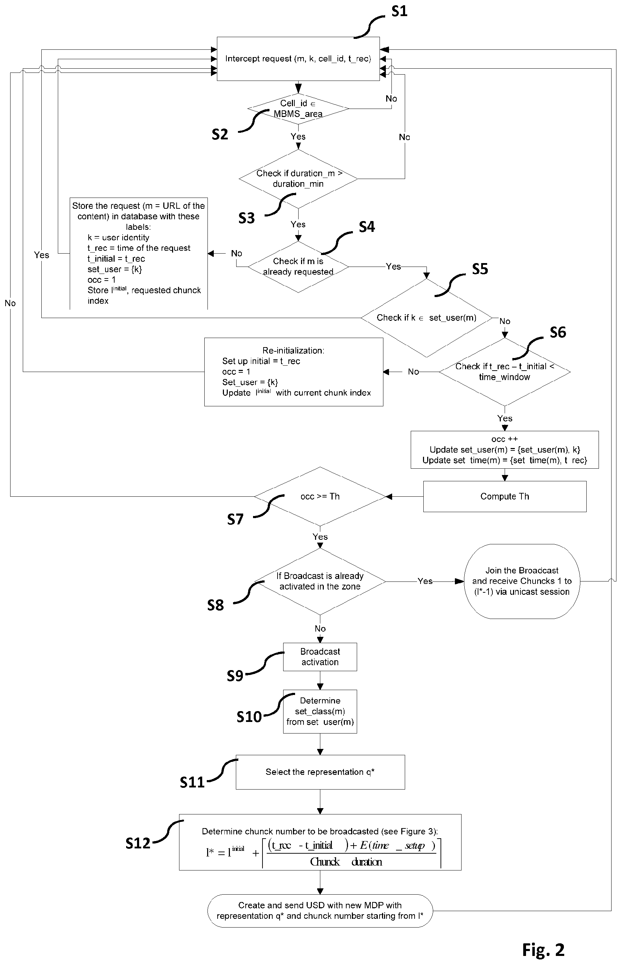

In the step S1 depicted on FIG. 2, this HTTP request is intercepted so as to get some information from it. Of course, the request is only intercepted for information gathering and it is let being transmitted to the server S.

In addition to the information gathered from the HTTP request, some further information can be retrieved from other sources, like for instance radio data, etc.

These information comprises:

- an identifier m of the content, e.g. an URL identifying the content;
- an identifier k of the user of the terminal. This identifier k can for instance be the MSISDN (Mobile Station ISDN Number) of the terminal;

- The location cell_id of the terminal, for instance an identifier of the cell to which the terminal is associated at the time it sends the content request;
- A time t_req, associated with the content request. This time can be the date at which the request is intercepted.

These data should be stored for further usage at the next steps of the method.

At step S2, a check can be undertaken for determining if, according to its location, the broadcast is possible or allowed. For instance, it can be checked whether the cell determined by the identifier cell_id belongs to a predefined MBMS area. If not, the process can stop and loop back to the step S1 for intercepting a next content request.

As it can be noted here, the subject matter allows handing requests for a same content received at different dates.

If broadcast transmission is possible and allowed, the process can move to a step S3 consisting in checking if the duration of the content is above a predetermined minimum duration.

This optional step is useful to filter out content too short compared with the time needed to establish the broadcast transmission (e.g. MBMS). In this case, switching to the broadcast mode would then not provide any advantage, or even decrease the overall performances of the system.

The minimum duration can be predetermined by the operator and may depend on a trade-of between the costs for the activation of a MBMS session versus the radio resource saved by broadcasting a short content instead of unicasting it.

The next step S4 consists in checking if the content m has previously been requested or not.

If the content request is a first request for a content m, the data corresponding to this request are stored in a database. The data can be associated in the database to the identifier m of the content. As mentioned on FIG. 2, the data may comprise:

- the identifier k of the user of the terminal;
- the date t_rec for the request;
- a start time t_initial for a time interval, or time window, associated to the content. As this a first request, this start time t_initial is set to the value of t_rec.
- a number of occurrences occ of request of the same content m.
- an index $l_{initial}$ of the requested chunk (or segment) of the content m.
- the identifier of the user k.

Typically, as it has been explained before for DASH technology, the content m is divided into several segments, and each of them are transmitted separately. Accordingly, it is important to store which segment of the content m is requested.

The identifier k of the user can be stored as a set. This set is denoted set_user or set_user(m) since it depends on the content m. As it is a first request for the content m, this set set_user for the content m is initialized as a singleton {k}.

The first request for a content m triggers the start of a time window during which the number of occurrences for this content is measured. As it will be explained with more details later, the broadcast mode is triggered according to number of requests for a same content received during a time window. For instance, according to an embodiment, it may be sufficient to receive 2 requests for the same content during a given time window (i.e. the time interval between two requests is short enough) to trigger the switch to broadcast mode.

As the request is a first one for the content m, no decision is taken regarding the switch to broadcast mode and the process loops back to step S1.

If this is not a first request, a step S5 may consist in checking if this request is issued by a user k who had already requested this content during the current time window (i.e. since the date t_initial). It consists in checking whether $k \in set\_user(m)$

This step S5 allows filtering out multiple requests for a same content issued by a user during a short time interval

If the user k is already in the set set_user(m), then the request should not increment the number of requests during the time window, and the process can loop back to step S1.

Step S6 consists in considering a time interval between the request and a first request. The underlying idea is to correlate requests for a same content which are close enough in time to trigger the switch to a broadcasting mode for a part of the content, but to avoid triggering this switch when the requests are not sufficiently close.

Accordingly, a time window is considered, defined by a start date t_initial and a duration.

More precisely, this step may consist in checking whether t_rec-t_initial is inferior or superior to the duration of the time interval (or time window).

Thanks to this mechanism, the subject matter allows taking into account asynchronous requests for a given content m and, consequently, makes it possible to enable, when appropriate and dynamically, broadcasting or multicasting on-demand contents to different terminals.

Then if the new request occurs too late compared with the first request, a re-initialization step is put in place consisting in

- re-initializing the start date t_initial to re_initial=t_rec, (i.e. in restarting the time window)
- resetting the number of occurrences to 1
- resetting the set of users to the singleton {k}, wherein k is the identifier of the user for the new request;
- and updating the index $l_{initial}$ to the current chunk index.

And then, the process can loop back to step 1 so as to wait for the next request to handle.

If the new request occurs within the time window, the number occ of occurrences is increased by 1 unit, and the set of users is updated to incorporate the new user's identifier: set_user(m)={set_user(m), k}.

In other words, at each new request for the same content m from a different user, a counter is incremented and this user is added to a set incrementally built to comprise all users requiring this content during the current time window.

According to an embodiment of the subject matter, the next step S7 consists in comparing this counter occ with a threshold Th.

This threshold could be setup to a predefined number by the operator. Experiences show that above 3 users consuming a same content from a given cell, it is worth activating the broadcast mode, using MBMS technology.

If the threshold is not yet trespassed, the process can loop back to step 1 for waiting for next content request.

Otherwise, the process can move forward to step S8 which consists in checking if the broadcast mode is already activated or not.

Indeed, at this step, it could happen that the conditions to trigger the switch to broadcast mode was met in a previous iteration of the process, and that the considered request is an additional one, which could be incorporated in the broadcast transmission.

In such a case, the chunks to be broadcasted are already scheduled and the new terminal can join the broadcast session to receive them, through the broadcast channel.

However, in order to catch up and resynchronize with the other terminals:

- the new terminal buffers the chunk received in broadcast mode (i.e. from chunk index l*)
- the network transmit in unicast mode the previous chunks (i.e. with an index from 1 to l*-1).
- the terminal can then first handle (e.g. display) the chunks transmitted in unicast mode before handling the chunks stored in the buffer.

The process can then loop back to step S1.

If no broadcast session is already activated in the area, then it should be created at step S9. More precisely, the network nodes N1, N2 are instructed to create a broadcast or multicast transmission session. Through this session, a broadcasted part of the content can be transmitted to terminals part of the session.

In general, especially according to an embodiment using the DASH technology, a chunk is made available by the server S according to several quality levels. Therefore, it should be decided which of these quality levels should be selected for broadcasting. As only one quality level can be selected commonly for all the recipient terminals, the decision should take into account the diversity of these terminals and be based on some heuristics.

According to an embodiment of the subject matter, the step S10 consists in determining the rendering possibilities (audio, video...) of all terminals associated with the users set_user(m) receiving the chunk through the broadcast session. These rendering possibilities can be represented as classes. These classes can represent the various types of terminals, like tablets, smartphones, computers... The granularity of the classes may vary.

Therefore a set of classes set_class(m) can be derived from the set of users set_users(m).

The step S11 may then consist in exploiting these rendering possibilities, for instance in the format of a set of classes, so as to determine the most appropriate quality level q* which maximizes the users' experience for the broadcast session.

Several embodiments are of course possible.

According to a first embodiment, the quality level to be broadcasted is determined by selecting the class the most represented in the set of classes set_class(m).

For instance, if 90% of the terminals are tablets and 10% are devices, like smart phones, with a smaller screen size, the quality level corresponding to the tablets can be selected.

More precisely, each terminal can be associated with a class. This information can be retrieve from the PCRF database ("Policy and Charging Rules Function"). So, a set of classes set_class(m) can be populated with the information of each terminal part of the broadcast session.

Then, the cardinality of each class can be easily calculated, and according to this embodiment, a selected class c* is determined as the class corresponding to the highest cardinality. The quality level q*(m) can then be determined as the highest one available for the current chunk of the content m, for the selected class c*.

According to a second embodiment, the quality to be broadcasted for the given chunk is determined as the highest one supported for all classes of terminals within the broadcast session.

These steps S10, S11 can be performed each time a new terminal joins the broadcast session, since each new terminal may jeopardize the established optimization, and a new quality q*(m) may have to be determined according to updated information.

The next step S11 consists in determining the chunk index 1*. This index determines which chunks are to be transmitted through the broadcast session.

This index 1* can be determined according to the duration of the chunks and to the decision date $t_4$.

For instance, this index 1* can be determined according to the expression:

$$ l^* = l_{initial} + \left\lceil \frac{(t\_rec - t\_initial) + E(time\_setup)}{chunk\ duration} \right\rceil $$

wherein E(time_setup) is a variable representative of the time required for setting up the broadcasting session.

This chunk and subsequent ones are transmitted through the broadcast session.

More generally, the part of the content transmitted through the broadcast session can be determined by the date t_rec, which is the creation date of the broadcast session. This date corresponds to the request received within the time window, which triggered the decision to create the session.

In parallel, the previous chunks, forming the remaining part of the content, can be transmitted through unicast sessions to terminals which have not yet received it, i.e. to terminals having originating a request on or after the creation of the broadcast session at creation date $t_4$.

After the creation of the broadcast session, then, the terminals receive the content, from one part through this broadcast session and for the remaining part from unicast session. The part transmitted in broadcast is typically distinct from the part transmitted in unicast. "Distinct" means here that the broadcasted part and the remaining part have no common data, and may form a partition of the content.

This aspect will be made clearer on the examples depicted on figures 3a and 3b.

The figures 3a and 3b depict on a simple example, the transmission of a multimedia content m, according to the prior art on figure 3a, and according to an embodiment of the subject matter, on figure 3b.

The figure 3a shows 5 content requests R1, R2, R3, R4, R5 for a same content. Each request triggers the transmission of the content through respective unicast session.

This content is divided into 6 chunks (or segments), C1, C2, C3, C4, C5, C6, referenced only for the request R1. References t1, t2, t3, t4, t5 represent the date for the start of the transmission of the content for the respective request R1, R2, R3, R4, R5.

The figure 3b shows an example of deployment of the subject matter, wherein the threshold is set to 4 for the number of requests triggering the switch to broadcast mode (i.e. the 4th request within the time window triggers to creation of the broadcast session).

Accordingly, the requests R1, R2, R3 trigger unicast transmission of the first chunks of the content.

The request R4 triggers then the switch to the broadcast mode by the creation of a broadcast session at date t4, as the conditions are met. This broadcast mode takes time to set up and the transmission through the broadcast session can then start at a time $t_b$.

The chunks to be transmitted are those starting at chunk index 1*, which can be calculated according to the formula previously provided, according to the value of t_initial=t1, t_rec=t4. In this example, this chunk index 1* is then 1*=4. Accordingly, a broadcast session is created to transmit the chunks C4, C5, C6.

Chunks C1, C2, C3 have already been transmitted to the terminals which have issued requests R1, R2, R3, but not yet to the terminals which have originating requests R4, R5, R6.

These chunks C1, C2, C3 are not within the part of the content transmitted through the broadcast session. Accordingly, unicast transmissions are triggered to transmit only these remaining chunks C1, C2, C3.

In the example illustrated by the figures 3a and 3b, it is assumed that the requests wish the segments starting from a same index 1. However, it is possible that each request wish the content starting with a different index. The algorithm can then be adapted to take into account this aspect. This would imply the controller to determine a common part among the requested segment, for broadcasting.

The subject matter thus allows a dynamic and "on the fly" switching from unicast to broadcast transmission of multimedia content over a mobile communication network.

The subject matter has been described with reference to preferred embodiments. However, many variations are possible within the scope of the subject matter.

## Claims

1. Method for transmitting multimedia contents to terminals connected to a mobile communication network, comprising

   - Receiving from the terminals, at a network controller device, requests (R1, R2, R3, R4, R5) for a same content (C1, C2, C3, C4, C5, C6), said content being divided into a plurality of chunks, and transmitting at least parts of said content to said terminal through respective unicast sessions,
   - Determining, at the network controller device, a decision time ($t_4$) as the time of the triggering of the creation of a broadcast or multicast session according to a number of requests received for said content during a time,

   **characterized in that**

   - Transmitting through said broadcast or multicast session, a broadcasted part (C4, C5, C6) of said content, said part starting from a first chunk determined by said decision time ($t_4$) and the duration of the chunks,
   - Transmitting after said decision time, through unicast sessions, a remaining part (C1, C2, C3) of said content to terminals for which said requests have been received on or after said decision time ($t_4$).

2. Method according to the previous claim, wherein the creation of a broadcast or multicast session further depends on the location of the terminals originating said requests.

3. Method according to any of the claims 1 or 2, wherein a chunk is made available according to several quality levels, and wherein the quality level to be broadcasted is determined by selecting the most represented class of terminals within the terminals receiving said chunk though said broadcast or multicast session, and by choosing the highest quality available for said most represented class.

4. Method according to any of the previous claim, wherein said decision is to not creating a broadcast or multicast session when the duration of said content is below a predetermined minimum duration.

5. Computer program product comprising computer-executable instructions for performing the method according to any of the previous claims, when run onto a data processing unit.

6. Controller of a mobile communication network for transmitting multimedia contents to terminals connected to said mobile communication network, adapted for

   - Receiving from the terminals, requests (R1, R2, R3, R4, R5) for a same content (C1, C2, C3, C4, C5, C6), said content being divided into a plurality of chunks, and transmitting at least parts of said content to said terminal through respective unicast sessions,
   - Determining a decision time ($t_4$) as the time of the triggering of a broadcast or multicast session, according to a number of requests received for said content during a time interval,

   **characterized in that** it is further adapted for

   - Transmitting through said broadcast or multicast session, a part (C4, C5, C6) of said content, said part starting from a first chunk determined by said decision time ($t_4$) and the duration of the chunks;
   - Transmitting after said decision time, through unicast sessions, a remaining part (C1, C2, C3) of said content to terminals for which said requests have been received on or after said decision time ($t_4$).

7. Controller according to claim 6, wherein the creation of a broadcast or multicast session further depends on the location of the terminals originating said requests.

## Patentansprüche

1. Verfahren zum Übertragen von Multimedia-Content auf Endgeräte, die mit einem mobilen Kommunikationsnetzwerk verbunden sind, umfassend:

   - Empfangen von den Endgeräten an einer Netzwerkcontrollervorrichtung von Anforderungen (R1, R2, R3, R4, R5) für denselben Content (C1, C2, C3, C4, C5, C6), wobei besagter Content unterteilt ist in eine Vielzahl von Blöcken, und Übertragen mindestens von Teilen besagten Contents auf besagtes Endgerät mittels entsprechender Unicast -Sitzungen,

- Bestimmen, an der Netzwerkcontrollervorrichtung, einer Entscheidungzeit ($t_4$) als die Zeit des Auslösens des Aufbaus einer Broadcast- oder Multicast-Sitzung gemäß einer Anzahl von Anforderungen, die für besagten Content während einer Zeit empfangen worden sind, **gekennzeichnet durch**:

- Übertragen mittels besagter Broadcast- oder Multicast-Sitzung eines rundgesendeten Teils (C4, C5, C6) von besagtem Content, wobei der Teil von einem ersten Block an beginnt, der durch besagte Entscheidungszeit ($t_4$) und die Dauer der Blöcke bestimmt wird,

- Übertragen nach besagter Entscheidungszeit, mittels Unicast-Sitzungen, eines verbleibenden Teils (C1, C2, C3) von besagtem Content an Endgeräte, für die besagte Anforderungen zu oder nach besagter Entscheidungszeit ($t_4$) empfangen worden sind.

2. Verfahren nach dem vorhergehenden Anspruch, wobei der Aufbau einer Broadcast- oder Multicast-Sitzung weiterhin abhängt von dem Ort der Endgeräte, von denen besagte Anforderungen stammen.

3. Verfahren nach einem beliebigen der Ansprüche 1 und 2, wobei ein Block verfügbar gemacht wird durch Entsprechen verschiedener Qualitätsstufen und wobei die Qualitätsstufe, die rundgesendet werden muss, bestimmt wird durch Auswählen der am besten repräsentierten Klasse von Endgeräten innerhalb der Endgeräte, die besagten Block empfangen durch besagte Broadcast- oder Multicast-Sitzung, und durch Auswählen der höchsten verfügbaren Qualität für besagte am besten repräsentierte Klasse.

4. Verfahren nach einem beliebigen der vorhergehenden Ansprüche, wobei besagte Entscheidung darin besteht, keine Broadcast- oder Multicast-Sitzung aufzubauen, wenn die Dauer besagten Contents unterhalb einer vorbestimmten Mindestdauer liegt.

5. Computerprogramm-Produkt, umfassend computerausführbare Befehle zum Durchführen des Verfahrens nach einem beliebigen der vorhergehenden Ansprüche, wenn es auf einer Datenverarbeitungseinheit läuft.

6. Controller eines mobilen Kommunikationsnetzwerks zum Übertragen von Multimedia-Content auf Endgeräte, die mit besagtem mobilen Kommunikationsnetzwerk verbunden sind, ausgelegt zum:

- Empfangen von den Endgeräten von Anforderungen (R1, R2, R3, R4, R5) für denselben Content (C1, C2, C3, C4, C5, C6), wobei besagter Content unterteilt ist in eine Vielzahl von Blöcken, und Übertragen mindestens von Teilen besagten Contents auf besagtes Endgerät mittels entsprechender Unicast-Sitzungen,

- Bestimmen einer Entscheidungszeit ($t_4$) als die Zeit des Auslösens einer Broadcast- oder Multicast-Sitzung gemäß einer Anzahl von Anforderungen, die für besagten Content während eines Zeitintervalls empfangen worden sind, **dadurch gekennzeichnet, dass** es weiterhin ausgelegt ist zum:

- Übertragen mittels besagter Broadcast- oder Multicast-Sitzung eines Teils (C4, C5, C6) von besagtem Content, wobei der Teil von einem ersten Block an beginnt, der durch besagte Entscheidungszeit ($t_4$) und die Dauer der Blöcke bestimmt wird;

- Übertragen nach besagter Entscheidungszeit, mittels Unicast-Sitzungen, eines verbleibenden Teils (C1, C2, C3) von besagtem Content an Endgeräte, für die besagte Anforderungen zu oder nach besagter Entscheidungszeit ($t_4$) empfangen worden sind.

7. Controller nach Anspruch 6, wobei das Erzeugen einer Broadcast- oder Multicast-Sitzung weiterhin abhängt von dem Ort der Endgeräte, von welchen besagte Anforderungen stammen.

## Revendications

1. Procédé pour transmettre des contenus multimédias à des terminaux connectés à un réseau de communication mobile, comprenant les étapes suivantes :

- recevoir en provenance des terminaux, au niveau d'un dispositif de contrôleur de réseau, des demandes (R1, R2, R3, R4, R5) pour un même contenu (C1, C2, C3, C4, C5, C6), ledit contenu étant divisé en une pluralité de fragments, et transmettre au moins des parties dudit contenu audit terminal par l'intermédiaire de sessions d'unidiffusion respectives,
- déterminer, au niveau du dispositif de contrôleur de réseau, un temps de décision ($t_4$) comme le temps du déclenchement de la création d'une session de diffusion ou de multidiffusion en fonction d'un nombre de demandes reçues pour ledit contenu pendant un temps,

**caractérisé en ce qu'**il comprend les étapes suivantes :

- transmettre par l'intermédiaire de ladite session de diffusion ou de multidiffusion, une partie diffusée (C4, C5, C6) dudit contenu, ladite partie commençant à partir d'un premier fragment déterminé par ledit temps de décision ($t_4$) et la durée des fragments,
- transmettre après ledit temps de décision, par l'intermédiaire de sessions d'unidiffusion, une partie restante (C1, C2, C3) dudit contenu à des terminaux pour lesquels lesdites demandes ont été reçues audit ou après ledit temps de décision ($t_4$).

2. Procédé selon la revendication précédente, dans lequel la création d'une session de diffusion ou de multidiffusion dépend en outre de la localisation des terminaux émettant lesdites demandes.

3. Procédé selon l'une quelconque des revendications 1 ou 2, dans lequel un fragment est rendu disponible en fonction de plusieurs niveaux de qualité, et le niveau de qualité à diffuser étant déterminé en sélectionnant la classe de terminaux la plus représentée dans les terminaux recevant ledit fragment par l'intermédiaire de ladite session de diffusion ou de multidiffusion, et en choisissant la qualité la plus élevée disponible pour ladite classe la plus représentée.

4. Procédé selon l'une quelconque des revendications précédentes, dans lequel ladite décision est de ne pas créer une session de diffusion ou de multidiffusion lorsque la durée dudit contenu est inférieure à une durée minimale prédéterminée.

5. Produit de programme informatique comprenant des instructions exécutables par ordinateur pour effectuer le procédé selon l'une quelconque des revendications précédentes, lorsqu'il est exécuté sur une unité de traitement de données.

6. Contrôleur d'un réseau de communication mobile pour transmettre des contenus multimédias à des terminaux connectés audit réseau de communication mobile, adapté pour :

- recevoir en provenance des terminaux, des demandes (R1, R2, R3, R4, R5) pour un même contenu (C1, C2, C3, C4, C5, C6), ledit contenu étant divisé en une pluralité de fragments, et transmettre au moins des parties dudit contenu audit terminal par l'intermédiaire de sessions d'unidiffusion respectives,
- déterminer un temps de décision ($t_4$) comme le temps du déclenchement de la création d'une session de diffusion ou de multidiffusion, en fonction d'un nombre de demandes reçues pour ledit contenu pendant un intervalle de temps,

**caractérisé en ce qu'**il est en outre adapté pour :

- transmettre par l'intermédiaire de ladite session de diffusion ou de multidiffusion, une partie (C4, C5, C6) dudit contenu, ladite partie commençant à partir d'un premier fragment déterminé par ledit temps de décision ($t_4$) et la durée des fragments ;
- transmettre après ledit temps de décision, par l'intermédiaire de sessions d'unidiffusion, une partie restante (C1, C2, C3) dudit contenu à des terminaux pour lesquels lesdites demandes ont été reçues audit ou après ledit temps de décision ($t_4$).

7. Contrôleur selon la revendication 6, dans lequel la création d'une session de diffusion ou de multidiffusion dépend en outre de la localisation des terminaux émettant lesdites demandes.

**Fig. 1**

**Fig. 3a**

**Fig. 3b**

S1

Intercept request (m, k, cell_id, t_rec)

Cell_id ∈ MBMS_area

S2

No

No

Yes

Check if duration_m > duration_min

S3

Yes

Store the request (m = URL of the content) in database with these labels:
k = user identity
t_rec = time of the request
t_initial = t_rec
set_user = {k}
occ = 1
Store l^initial, requested chunck index

S4

No

Check if m is already requested

Yes

S5

Check if k ∈ set_user(m)

No

S6

Re-initialization:
Set up initial = t_rec
occ = 1
Set_user = {k}
Update l^initial with current chunk index

No

Check if t_rec – t_initial < time_window

Yes

Yes

occ ++
Update set_user(m) = {set_user(m), k}
Update set_time(m) = {set_time(m), t_rec}

Compute Th

occ >= Th

S7

No

Yes

If Broadcast is already activated in the zone

Yes

Join the Broadcast and receive Chuncks 1 to (l*-1) via unicast session

S8

No

Broadcast activation

S9

Determine set_class(m) from set_user(m)

S10

Select the representation q*

S11

Determine chunck number to be broadcasted (see Figure 3):

$$l^* = l^{initial} + \left\lceil \frac{(t\_rec - t\_initial) + E(time\_setup)}{Chunck\ duration} \right\rceil$$

S12

Create and send USD with new MDP with representation q* and chunck number starting from l*

**Fig. 2**

**REFERENCES CITED IN THE DESCRIPTION**

**Patent documents cited in the description**

- EP 2785006 A1

- US 2012155358 A1